(19) Europäisches Patentamt

European Patent Office

Office européen des brevets

(11) **EP 0 522 800 B2**

(12) **NEW EUROPEAN PATENT SPECIFICATION**

(45) Date of publication and mention
of the opposition decision:
**31.01.2001 Bulletin 2001/05**

(45) Mention of the grant of the patent:
**17.09.1997 Bulletin 1997/38**

(21) Application number: **92306133.7**

(22) Date of filing: **02.07.1992**

(51) Int Cl.[7]: **A23J 3/14**, A23J 3/16,
A23J 3/18

(54) **Protein concentrates**

Eiweisskonzentrate

Concentrés protéiques

(84) Designated Contracting States:
**AT BE CH DE DK ES FR GB GR IT LI LU NL PT SE**

(30) Priority: **09.07.1991 GB 9114774**
**29.11.1991 GB 9125486**

(43) Date of publication of application:
**13.01.1993 Bulletin 1993/02**

(73) Proprietor: **DALGETY PLC**
**London W1H 5RH (GB)**

(72) Inventors:
• **Fitchett, Colin Stanley**
**Cambridge CB1 3AJ (GB)**
• **Frazier, Peter John**
**Huntington, Cambridgeshire PE18 9PG (GB)**
• **Candy, Michael John**
**Tetbury, Gloucestershire GL8 8YR (GB)**

(74) Representative: **Price, Vincent Andrew et al**
**FRY HEATH & SPENCE**
**The Old College**
**53 High Street**
**Horley Surrey RH6 7BN (GB)**

(56) References cited:
FR-A- 2 390 108       US-A- 2 881 076
US-A- 3 001 875       US-A- 3 930 058
US-A- 4 178 391

• **PATENT ABSTRACTS OF JAPAN vol. 007, no.
131 8 June 1983**
• **PATENT ABSTRACTS OF JAPAN vol. 014, no.
334 18 July 1990**
• **Karen Moore:"Upgrade soy protein concentrate
exhibits functional properties" Food Product
Development,May 1980, pp.62-64**
• **Central Soya Company, Inc., Sales Info 1988:
"Promine 70-70L"**

Remarks:
The file contains technical information submitted
after the application was filed and not included in this
specification

EP 0 522 800 B2

**Description**

Vegetable protein concentrates or isolates derived for example from soya are widely used in the food industry, for example in the manufacture of comminuted meat products such as sausages. Non-functional protein concentrates are generally used simply as a protein enrichment ingredient but isolates and functional concentrates have the important functional ability to bind fat and water into stable emulsions and to form a firm stable gel upon cooking.

Protein concentrates generally have a protein content of e.g. from 65% to below 70% by weight, typically for example about 65%, whereas protein isolates have a protein content for example in excess of 90%. The functionality of protein isolates for the formation of stable emulsions and a firm gel on cooking has generally been significantly superior to that of protein concentrates, but the isolates are more expensive than the concentrates.

Possible alternatives to soya as the raw material for vegetable protein isolates and concentrates include lupin, pea, wheat gluten, sunflower and rape. although sunflower and rape may be less acceptable owing to phenolic taints derived from their seed coats unless the polyphenolic constituents are extracted.

One known process for the manufacture of a low functionality protein concentrate involves washing defatted soya grits with aqueous alcohol in order to remove low molecular weight carbohydrate oligomers and so concentrate the protein fraction of the soya. The protein is rendered insoluble by the alcohol and retained in a slurry. The slurry is evaporated and dried e.g. by spray drying or alternatively counter-current alcohol extraction is employed. The proteins in the concentrate are considered to be denatured by the alcohol and may have been damaged by the defatting process if heat has been used. Their role in foods is generally as a protein enrichment ingredient without significant fat binding or gelling properties.

In another known process which produces protein concentrates of higher functionality, the proteins are rendered insoluble by acid washing at their isoelectric point, (e.g. pH 4.2), with unwanted carbohydrates being washed away. The less acidic, whey fraction, containing enzyme active proteins is also removed at this stage as a relatively small proportion of the total protein. In this process denaturation by alcohol is avoided and careful defatting to yield defatted grits of high protein dispersibility index (PDI) e.g. in excess of 65 (e.g. in the range 65-80) can minimise damage in the starting material. Protein dispersibility index is defined for example in "Soybeans: Chemistry and Technology" Volume 1 "Proteins" by A.K. Smith and S.J. Circle, The Avi Publishing Company, Inc., U.S.A. 1972. In this process the native undenatured structure or "vitality" can be retained unlike alcohol-washed concentrates. The washed slurry may be evaporated and dried as in the alcohol washing process.

Concentrates produced by both these processes contain residual, high molecular weight, insoluble carhohydrates of arabinogalactan composition, concentrated by the process to about 25% by weight.

The highly functional and more expensive protein isolates may be produced for example again by acid washing at the isoelectric point, but followed by disolving the washed slurry in alkali, separating the solid residue containing insoluble carbohydrates from the solution and re-precipitating the protein at e.g. pH 7.0.

In EP 13093-A of A.E. Staley Manufacturing Company, a process is described in which the functionality of a protein is improved by treatment at an elevated temperature and a pH from 6.5 to 9. High shear and pressure are also required in the process which relies on increasing the water solubility of the protein. The resulting concentrates have functionality slightly better than conventional isoelectrically prepared concentrates but well below that achieved by protein isolates.

It is an object of the present invention to provide a process for producing a protein concentrate of improved functionality.

The invention provides a process as described in claim 1.

Usually the aqueous slurry will be taken directly from the isoelectric preparation procedure omitting the drying step of that procedure.

The aqueous slurry to be treated for example has a solids content of 12-25% by weight e.g. 12-17%; the alkaline pH of the treatment is for example 7.5-9.0 or 9.5, e.g. 7.5-8.5.

The treatment temperature is 80°C-95°C, e.g. about 85°C and for example is maintained for about 30 minutes.

Typically the alkaline conditions are maintained by sodium hydroxide addition but other alkalis such as potassium, calcium or ammonium hydroxides could be used. Neutralisation is for example effected by the addition of hydrochloric acid.

The invention also provides an isoelectrically prepared protein concentrate of enhanced functionality obtainable by a process according to the invention.

We believe that when isoelectrically prepared concentrates are treated by a process embodying the invention the performance exceeds that of all known concentrates and approaches, or may even exceed, that of isolates. The functionality increases in spite of a decrease in the solubility of the soya protein and is achieved by modifying the concentrate to give a higher water absorption without the loss of existing high fat absorption.

It will be noted that the decrease in solubility is in contrast to EP 13093 where the solubility increases.

In our view it is not particularly surprising that heat and alkaline conditions would improve the relatively low functionality of a concentrate such as PROCON 2000 as referred to in EP 13093, where in any event the proteins have almost certainly been denatured by alcohol washing. On the other hand it is indeed surprising that heat and alkali treatment improves the functionality of an isoelectrically prepared concentrate where the expectation would have been that such harsh treatment might well adversely affect the retained native protein structure.

Examples of products in which protein concentrates embodying the invention may be used include sausages, burgers and grillsteaks, canned meat, meat pies, fish and meat spreads and pastes; quiches and flans, textured vegetable protein, vegetarian grillsteaks, vegetarian pates and spreads; frozen, chilled canned, packet and ambient deserts; savoury and sweet spreads, pates, cheese spreads, vegetable and meat extracts, sandwich spreads; childrens and babies' foods; low calorie dressings, low fat cream alternatives, low fat spreads, low fat cheeses; ice cream, yoghurt and dairy spreads, yellow fats and ready-made flavoured drinks.

Typically the food industry requires emulsions of weight ratio 1:5:5 (soya protein:water:fat), particularly in stabilising food systems that use high fat and water mixtures such as for example sausages, other comminuted meat products, and dairy product replacers. This can be achieved by using protein isolates but not generally by using protein concentrates. It was believed that soya protein concentrates could not match the maximum fat:water emulsifying properties of soya protein isolates. A process embodying the invention enables stable emulsions to be prepared at the required 1:5:5 (protein:water:fat) ratio and even as high as 1:10:20 or 1:15:30 (protein:water:fat).

The invention also provides a protein concentrate according to the invention capable of forming an emulsion comprising 1 part by weight (dry basis) of the protein concentrate; 5-15 (e.g. 5-10) parts by weight water; and 5-30 (e. g. 5-20) parts by weight fat.

The invention also provides an emulsion comprising 1 part by weight (dry basis) of a protein concentrate according to the invention, at least 5 parts by weight water, and at least 5 parts by weight fat.

A protein concentrate according to the invention has for example a protein content of at least 65%, a fat absorption of at least 200% and a water absorption at pH=7 of at least 300%.

The temperatures involved in the process also reduce the microbiological count of the protein concentrate.

We have found that important parameters in assessing protein functionality include, water absorption, paste viscosity as measured using a Rheometrics Fluid Spectrometer; and a bowl chopper emulsion test.

Example I

Starting Material

NEWPRO - A soya protein concentrate prepared from defatted soya grits of PDI in the range 68-74 and marketed by Lucas Ingredients Limited of Bristol, England. The defatting is carried out by solvent extraction using low heat during the removal of the extraction solvent.

NEWPRO has the following characteristics:-

| | |
|---|---|
| Protein Content (dry basis) | 65% by weight |
| Protein Solubility | 74g/l |
| Fat Absorption | 212% |
| Water Absorption | 170% at pH = 7.0 |

These characteristics were determined as follows:-

Protein Assay

Protein was determined by Kjeldahl using a factor of 6.25.

Solubility of Protein

The true solubility of protein was determined by extracting 1g sample in 10 ml water at ambient temperature with stirring. The solution was recovered by centrifugation and filtration for spectrophotometric analysis. The absorbance at 280 nm was determined in a 1cm path cuvette and related to the protein concentration by the approximate formula

$$\text{Protein Concentration (mg/ml)} = A_{280}$$

Fat Absorption

Protein concentrate 3.34g was weighed into a graduated centrifuge tube and 20ml corn oil added. The contents were mixed and held at ambient temperature for 30min. The free oil was separated by centrifugation at 3200rpm for 25min and measured volumetrically. Fat absorption was expressed as the quantity of oil bound by 100g of sample, on a 14% moisture basis, and is subject to an error of around ± 10%. This test will provide a relative grading for a protein preparation that relates to, rather than reproduces, the exact numerical value found in full formulation testing.

Water Absorption

Protein concentrate 2g, was dispersed in 12ml of water in a pre-weighed centrifuge tube. The suspension was centrifuged at 13,000g for 20min and the supernatant water decanted off and the tubes allowed to drain inverted. The tubes containing hydrated protein were re-weighed and the weight of absorbed water calculated.

Treatment

A 17% solids by weight aqueous slurry of NEWPRO was adjusted to pH 9.0 by the addition of 40% sodium hydroxide with stirring. The slurry was held at a temperature of 85°C for 30 minutes, and then neutralized to about pH 7.0 with dilute hydrochloric acid and allowed to cool.

The treated material had the following characteristics determined as before:

| | |
|---|---|
| Protein Content (dry basis) | 65% by weight |
| Protein Solubility | 34g/l |
| Fat Absorption | 209% |
| Water Absorption | 382% at pH=7 |

Paste Viscosity Test

The paste viscosity of the treated slurry was measured at 17% solids using a Rheometrics Fluids Spectrometer RFS 8400 as marketed by Rheometrics Inc. of New Jersey, U.S.A. The test was performed using a 15mm diametric parallel plate at 25rad/s shear over 8min at 20°C. The value obtained has units Pas. This paste viscosity is related to water binding ability.

The treated slurry had a paste viscosity of 258 Pas as measured by this test as compared with only 38 Pas for a control slurry of 17% NEWPRO simply hydrated at ambient temperature for 20 minutes without any pH adjustment.

Example II

The procedure of Example I was repeated at 10% solids and 25% solids by weight In the case of 10% solids the treated slurry had a paste viscosity of 0.45 Pas as compared with 0.24 Pas for a 10% control slurry. In the case of 25% solids the treated slurry had a paste viscosity of 1128 Pas as compared with 392 for a 25% control slurry.

Example III

156kg of a 17% solids by weight NEWPRO slurry was heated in a steam heated stirred vessel. The pH was adjusted to pH 8.5 with NaOH solution. Heat transfer to the slurry was slow and temperatures were recorded as in Table 1. The maximum temperature attained was 78°C after 55 min. The pH was monitored during the treatment and recorded in Table 1.

Table 1

| Temperature and pH profiles for heated slurry | | |
|---|---|---|
| Time (min) | Temperature (°C) | pH |
| 0 | Ambient | 8.5 |
| 30 | 60 | 7.9 |
| 35 | 64 | |
| 45 | 72 | |

Table 1   (continued)

| Temperature and pH profiles for heated slurry | | |
|---|---|---|
| Time (min) | Temperature (°C) | pH |
| 55 | 78 | 7.5 |
| * 65 | 77 | |
| 75 | | 7.4 |

(*Steam turned off at 60 min).

It will be realized from Table 1 that the slurry was held at a temperature in excess of 75°C at a pH above 7.5 for about 10-20 minutes.

It was noted that the consistency of the slurry changed during the treatment. On treatment with alkali the slurry became glossy textured, yellowish and sticky. As the heating proceeded, the slurry thinned in the 30 min period up to 60°C but became noticeably thicker at 78°C after 55 min. The final product was gel-like and firm and capable of forming stable emulsions with water and fat of up to 1:15:30 (protein:water:fat). The effect of shear close to the stirrer was to thin the slurry somewhat.

Example IV

A 17% solids by weight NEWPRO slurry of pH 6.8 was adjusted to pH 9.0 using sodium hydroxide and pumped into a scraped surface heat exchanger. The throughput of slurry was 1000kg/hr at a temperature of 85°C-95°C; the residence time in the heat exchanger was 1.2 minutes. After passage through the heat exchanger, the slurry was adjusted in line to pH 6.8 using hydrochloric add and diluted to 12% solids by weight. The product was spray dried on a Niro F35 spray drier with inlet temperature of 180°C and collected.

Bowl Chopper Test

500 grams of the spray dried product was mixed with 2.5kg of water at low speed for 2 minutes using an Alexanderwerk 2 speed bowl chopper of nominal capacity 18kg. 2.5kg of ground nut oil was added at high speed for 3 minutes and the emulsion allowed to develop for a further 3 minutes on high speed. The hood was cleared down at 2 and 5 minutes.

The material from the chopper provided a stable emulsion which remained stable on cooking.

Example V

Various sausages were prepared using a bowl chopper as follows:

| Pork Sausages | | Pork and Beef Sausages | |
|---|---|---|---|
| Overall Composition by Weight | | Overall Composition by Weight | |
| Protein | 2% | Protein | 3% |
| Water | 22% | Water | 33% |
| 80/20 Lean Pork | 40% | 80/20 Lean Pork | 30% |
| Back Fat | 20% | Beef Fat | 7% |
| Pork Rinds | 6% | Back Fat | 10% |
| Seasoning | 2.5% | Pork Rinds | 4% |
| Rusk | 6% | Seasoning | 2.5% |
| Farina | 1.5% | Rusk | 9% |
| | | Farina | 1.5% |
| | 100% | | |
| | | | 100% |

The protein was hydrated with slightly more than half the water with the addition of the farina and seasoning; these components were mixed for 30 seconds on slow speed.

The mixer speed was then increased to fast, the lean meat and rinds added, the mixture chopped for 60 seconds, the hood deared down and the mixture part-chopped for a further 30 seconds.

The fats were then added with chopping on fast speed for 30 seconds, dearing down of the hood and chopping for a further 30 seconds.

The rusk was then chopped in at slow speed together with the remaining water for 30 seconds, the hood cleared down and chopping for 30 seconds on fast speed.

The protein was prepared as in Example I. Control sausages were also prepared using untreated NEWPRO as the protein concentrate in one case and 500E isolate in another. 500E isolate is a functional protein isolate of 90% by weight protein marketed by Protein Technologies International, U.S.A.

Some sausages were then shallow fried for 20 minutes and others were deep fried for 7 minutes.

The results are shown in Table 3

| Shallow Fry - 20 minutes | | | | | | |
|---|---|---|---|---|---|---|
| | | NO SPLITS | SLIGHT SPLITS | FULL SPLITS | TEXTURE | TOTAL LOSS |
| PORK SAUSAGE | Untreated NEWPRO | - | 85% | 15% | SOFT | 5.6% |
| | 500E | 75% | 25% | - | FIRM | 5.6% |
| | Treated NEWPRO | 90% | 10% | - | FIRM | 3.9% |
| PORK & BEEf | Untreated NEWPRO | - | 25% | 75% | SOFT | 7.0% |
| | 500E | 25% | 75% | - | FIRM | 8.4% |
| | Treated NEWPRO | 40% | 60% | - | FIRM | 7.0% |

| Deep Fry - 7 minutes | | | | | |
|---|---|---|---|---|---|
| | | "BUTTER FLY" | SLIGHT SPLITS | WHOLE SAUSAGES | REMARKS |
| PORK | Untreated NEWPRO | 20% | 80% | - | UNSATISFACTORY |
| | 500E | - | 10% | 90% | SATISFACTORY |
| | Treated NEWPRO | - | 10% | 90% | SATISFACTORY |
| PORK & BEEF | Untreated NEWPRO | 10% | 30% | 60% | PROTRUDING ENDS |
| | 500E | - | - | 100% | SATISFACTORY |
| | Treated NEWPRO | - | - | 100% | SATISFACTORY |
| "Butterfly" refers to longitudinal splitting of the sausages. | | | | | |

Example VI

A rind emulsion was prepared using a bowl chopper as follows:

| Pork Rinds | 5 parts by weight |
|---|---|
| Water | 5 parts by weight |
| Protein | 1 part by weight (dry basis). |

The preparation procedure was generally as in Example V but all the water was added prior to mixing.

The protein used was as in Example I and these emulsions were deep fried as in Example V.

The untreated NEWPRO emulsion proved unstable on cooking while 500E and the treated NEWPRO were stable and of comparable stability.

While not wishing to be bound by theory it is believed that untreated NEWPRO has a high proportion of soluble hydrophobic protein which will bind fat but not water. Protein isolates are similarly characterised but isolates also contain an insoluble protein which is effective for binding water. The basic water binding ability of NEWPRO is thought to derive from its insoluble polysaccharide content.

We believe that by the heat and alkali treatment we promote the formation of disulphide linkages in the hydrophobic protein which causes it to aggregate thereby becoming less soluble but retaining its hydrophobic and fat absorbing properties. The reduced solubility of the protein (albeit still hydrophobic) confers it with a water binding macro-structure.

## Claims

1. A process of treating a vegetable protein concentrate isoelectrically prepared from a defatted proteinaceous material having a protein dispersibility index (PDI) in excess of 65 and having a protein content of below 70% by weight (e.g. from 65% to below 70%) to enhance its functionality for binding fat and water into a stable emulsion, comprising the steps in the absence of substantial shearing forces of

    (a) holding an aqueous slurry of the concentrate at an alkaline pH, and a treatment temperature of 80°C-95°C for 1-120 minutes e.g. 1-60 min;
    (b) neutralizing the treated slurry e.g. to a pH of 6.8 to 7.0; and optionally
    (c) evaporating the neutralized slurry and drying it by for example spray drying,

    wherein the solubility of the protein is decreased by the treatment.

2. A process according to claim 1 wherein the aqueous slurry to be treated has a solids content of 12-25% by weight, e.g. 12-17% by weight.

3. A process according to claim 1 or claim 2, wherein said alkaline pH is 7.5-9.0 or 9.5, e.g. 7.5-8.5.

4. A process according to any one of the preceding claims, wherein the treatment temperature is about 85°C.

5. A process according to any one of the preceding claims wherein the protein is derived from soya, wheat gluten, lupin, pea, sunflower or tape.

6. A process according to any one of the preceding claims, wherein the protein concentrate has a PDI in the range of 65-80.

7. An isoelectrically prepared protein concentrate of enhanced functionality obtainable by a process according to any one of the preceding claims and e.g. having a protein content of at least 65% by weight, a fat absorption of at least 200% and a water absorption at pH=7 of at least 300%.

8. A protein concentrate according to claim 7, capable of forming an emulsion comprising 1 part by weight(dry basis) of the protein concentrate; 5-15 (e.g. 5-10) parts by weight water and 5-30 (e.g. 5-20) parts by weight fat.

9. An emulsion comprising 1 part by weight (dry basis) of a protein concentrate according to claim 7, at least 5 parts by weight water and at least 5 parts by weight fat.

## Patentansprüche

1. Verfahren zur Behandlung eines Pflanzeneiweißkonzentrats, das isoelektrisch von einem entfetteten proteinhaltigen Material mit einem Eiweiß-Dispergierbarkeits-Index (PDI) von mehr als 65 zubereitet wird, und das einen Eiweißgehalt von weniger als 70 Gew.-% (beispielsweise von 65 % bis unter 70 %) aufweist, um dessen Funktionalität zum Binden von Fett und Wasser in eine stabile Emulsion zu verstärken, mit den bei Fehlen von wesentlichen Scherkräften durchgeführten Schritten des

EP 0 522 800 B2

(a) Haltens einer wäßrigen Aufschlämmung des Konzentrats auf einem alkalischen pH-Wert und auf einer Behandlungstemperatur von 75°C - 95°C für 1-120 Minuten, beispielsweise 1-60 Minuten,

(b) Neutralisierens der behandelten Ausschlämmung beispielsweise auf einen pH-Wert von 6,8 bis 7,0, und optional

(c) des Verdampfens der neutralisierten Aufschlämmung und deren Trocknung beispielsweise durch Sprühtrocknung,

wobei die Lösbarkeit des Eiweißes durch die Behandlung verringert wird.

2. Verfahren nach Anspruch 1, bei dem die zu behandelnde wäßrige Aufschlämmung einen Feststoffgehalt von 12 - 25 Gew.-%, beispielsweise 12 - 17 Gew.-% aufweist.

3. Verfahren nach Anspruch 1 oder 2, bei dem der alkalische pH 7,5 - 9,0 oder 9,5, beispielsweise 7,5 bis 8,5 ist.

4. Verfahren nach einem der vorhergehenden Ansprüche, bei dem die Behandlungstemperatur ungefähr 85°C beträgt.

5. Verfahren nach einem der vorhergehenden Ansprüche, bei dem das Eiweiß von Soja, Weizen-Gluten, Lupin, Erbse, Sonnenblume oder Raps abgeleitet ist.

6. Verfahren nach einem der vorhergehenden Ansprüche, bei dem das Proteinkonzentrat einen PDI in dem Bereich von 65 - 80 aufweist.

7. Ein isoelektrisch zubereitetes Eiweißkonzentrat mit einer verbesserten Funktionalität, das durch ein Verfahren gemäß einem der vorhergehenden Ansprüche gewinnbar ist und beispielsweise einen Eiweißgehalt von zumindest 65 Gew.-%, eine Fettabsorption von zumindest 200 % und eine Wasserabsorption bei einem pH-Wert von 7 von zumindest 300 % aufweist.

8. Ein Eiweißkonzentrat nach Anspruch 7, das in der Lage ist, eine Emulsion zu bilden, die 1 Gewichtsteil (Trockenbasis) des Eiweißkonzentrats, 5 - 15 (beispielsweise 5 - 10) Gewichtsteile Wasser und 5 - 30 (beispielsweise 5 - 20) Gewichtsteile Fett umfaßt.

9. Eine Emulsion, die 1 Gewichtsteil (Trockenbasis) eines Eiweiß-Konzentrats nach Anspruch 9, zumindest 5 Gewichtsteile Wasser und zumindest 5 Gewichtsteile Fett umfaßt.

**Revendications**

1. Procédé de traitement d'un concentré de protéine végétale préparé de façon isoélectrique à partir d'une matière protéinique dégraissée ayant un indice de dispersabilité de la protéine (PDI) supérieur à 65 et ayant une teneur en protéine inférieure à 70% en poids (par exemple de 65% à moins de 70%) pour améliorer sa fonctionnalité de lier la graisse et l'eau sous forme d'une émulsion stable, comprenant les étapes en l'absence de forces de cisaillement substantielles de

(a) maintenir une boue aqueuse du concentré à un pH alcalin, et une température de traitement de 80°C à 95°C pendant 1 à 120 minutes, par exemple 1 à 60 minutes;

(b) neutraliser la boue traitée, par exemple à un pH de 6,8 à 7,0; et au choix

(c) évaporer la boue neutralisée et sécher celle-ci, par exemple par séchage par pulvérisation ;

dans lequel la solubilité de la protéine est diminuée par le traitement.

2. Procédé selon la revendication 1, dans lequel la boue aqueuse à traiter a une teneur en solides de 12 à 25% en poids, par exemple 12 à 17% en poids.

8

**3.** Procédé selon la revendication 1 ou 2, dans lequel le pH alcalin est de 7,5 à 9,0 ou 9,5, par exemple 7,5 à 8,5.

**4.** Procédé selon l'une quelconque des revendications précédentes, dans lequel la température de traitement est d'environ 85°C.

**5.** Procédé selon l'une quelconque des revendications précédentes, dans lequel la protéine est dérivée du soja, du gluten de froment, du lupin, du petit pois, du tournesol, ou du colza.

**6.** Procédé selon l'une quelconque des revendications précédentes, dans lequel le concentré de protéine possède un PDI dans le domaine de 65 à 80.

**7.** Concentré de protéine préparé de façon isoélectrique ayant une fonctionnalité améliorée susceptible d'être obtenu par un procédé selon l'une quelconque des revendications précédentes et, par exemple ayant une teneur en protéine d'au moins 65% en poids, une absorption de graisse d'au moins 200% et une absorption d'eau à pH = 7 d'au moins 300%.

**8.** Concentré de protéine selon la revendication 7, capable de former une émulsion comprenant 1 partie en poids (base sèche) du concentré de protéine; 5 à 15 (par exemple 5 à 10) parties en poids d'eau et 5 à 30 (par exemple 5 à 20) parties en poids de graisse.

**9.** Emulsion comprenant une partie en poids (base sèche) d'un concentré de protéine selon la revendication 7, au moins 5 parties en poids d'eau et au moins 5 parties en poids de graisse.